# EUROPEAN PATENT SPECIFICATION

(11) **EP 2 678 177 B1**
(45) Date of publication and mention of the grant of the patent: **10.05.2017**
(21) Application number: 12708514.0
(22) Date of filing: 23.02.2012
(51) Int. Cl.: B60J 10/00, B60J 10/265, B60J 10/30, B60J 10/70

(54) **VEHICLE GLAZING WITH MOULDED PROFILE AND DECORATIVE TRIM STRIP**
KFZ-FENSTER MIT ANGESPRITZEM PROFIL UND ZIERLEISTE
VITRE DE VÉHICULE AVEC UN MOULAGE ET UN ENJOLIVEUR

(30) Priority: 23.02.2011 GB 201103086
(43) Date of publication of application: 01.01.2014
(73) Proprietor: PILKINGTON Automotive Deutschland GmbH, 58455 Witten (DE)
(72) Inventor: ERNER, Wolfgang, 58640 Iserlohn (DE)
(74) Representative: Pettet, Nicholas Edward
(86) International application number: PCT/EP2012/053114
(87) International publication number: WO 2012/113892

(56) References cited:
- WO-A1-2010/052418
- DE-A1- 3 432 592
- DE-A1- 10 350 802
- DE-A1-102004 035 680
- US-A- 4 904 014
- US-B1- 6 546 683

## Description

The present invention relates to a vehicle glazing, in particular to a vehicle glazing including a glazing profile adapted to receive a decorative trim strip, to a retaining clip for retaining the decorative trim strip, and to the combination of the vehicle glazing, the retaining clip and the decorative trim strip. The invention also relates to the removal of certain shapes of moulded article, known as undercut parts, from a mould.

It is known to provide a vehicle glazing with a decorative trim strip, also known as a decorative finisher. Such trim strips may for example be used to differentiate higher specification variants within a model range. A variety of colours and finishes are used for trim strips; amongst them metallic effects, especially silver or chrome effects, are particularly popular. Chrome effect trim is often referred to as "bright trim". Alternatively, black trim may be used, which may have a matt or gloss finish.

Vehicle glazings are frequently provided with a glazing profile of elastomeric material, which fulfils a number of functions in connection with installing the glazing in an aperture in the bodywork of a vehicle. The aperture is normally defined and surrounded by the edge of a mounting flange provided as part of the bodywork. For instance the glazing profile may serve to locate the glazing in the aperture and space it from the bodywork of the vehicle, and, together with an adhesive, to provide a weather tight seal. Furthermore, the glazing profile protects the adhesive from degradation by light, and obscures the adhesive and the mounting flange from external view.

One way of manufacturing a glazing profile is by injection moulding, employing an injection moulding machine including a mould. At its simplest, an injection mould comprises two mould halves which together define a mould cavity, into which fluid elastomeric material is injected and allowed to set to form a moulding. The mould is then opened, and the moulding, i.e. the glazing profile, is removed (or "demoulded" in the language of the art). In a preferred variant known as edge encapsulation, the glazing profile is moulded in situ on a pane of glass. In this variant, the pane of glass is at least partially introduced into the mould, with its edge protruding into the mould cavity. Care must be taken to avoid breaking the glass when the mould is shut.

It is often desired to mount a decorative trim strip on a glazing profile, and it is in fact possible to mount the trim strip directly on the glazing profile. However, this has not been found satisfactory in many cases, because the trim strip is too easily detached from the glazing profile, and the mounting portion of the glazing profile is often damaged in the process, making reinstatement or replacement of the trim strip difficult.

It has also been proposed to employ a profiled part in an intermediate position between the glazing profile and the decorative trim strip. DE 34 32 592 A1 discloses a glazing profile for a motor vehicle window which has channels for receiving the window and a flange of the vehicle body. The glazing profile may also be provided with a T-shaped groove for receiving a holding rail, which is itself T-shaped in cross-section, and receives an attachment leg of a cover strip.

WO 2009/146682 A1 (US 2011/0179628 A1 corresponds) discloses a profiled part composed of soft elastic material, a portion of which may be squeezed into a receiving space of the decorative trim strip. Another portion is then inserted into a recess in the glazing profile. In practice, the decorative trim strip is easily removed from the glazing because the soft elastic material is not capable of exerting a sufficient retaining force.

It is therefore preferable to employ a rigid clip which engages both the glazing profile and the trim strip, and thereby acts as an intermediate device which fastens the two together. Suitably designed clips provide secure retention of the trim strip, while allowing its removal and reinstatement or replacement. In practice a number of such clips is used at spaced intervals around the part of the periphery of the glazing to which the decorative trim strip is to be attached.

WO 2010/052418 A1 discloses an example of such a clip. The clip has one type of engaging portion for engagement with the glazing profile, and another type of engaging portion for engagement with the decorative trim strip. The first type of engaging portion comprises a plurality of deformable connecting tabs which are deformed by application of force to the ends of the tabs. The tabs are on opposed sides of the clip, and force is applied in opposing directions so as to force the tabs towards each other and into the material of the glazing profile, thereby penetrating the material and gripping it. In this system each clip grips the glazing profile in whatever position it may be when the force is applied, so it is important to ensure that the clip is accurately located at that moment. Accurate location of the clips, and hence the decorative trim strip, is critical to avoid unsightly gaps between the trim strip and the glazing profile, and also to avoid squeaks or rattles.

One way of ensuring accurate placement of such clips is to provide locating grooves in the glazing profile. Normally, a portion of the glazing profile is adapted to receive and retain the retaining clips for the decorative trim strip, and this portion may be referred to as the retaining portion of the glazing profile. The retaining portion may be provided with one or more locating grooves which serve to locate the clips accurately relative to the glazing profile, and which also serve as retaining grooves to retain the retaining clips on the glazing profile. However, the depth of these grooves needs in practice to be restricted, otherwise problems may arise in extracting the part (i.e. the moulded article) from the mould. This is because the grooves represent undercuts, an undercut being at its broadest an aspect of the shape of the part that prevents the part being removed from the mould.

Precisely which aspects of the shape of a part constitute undercuts depends on their position and orientation relative to the mould split line (i.e. the line, or more precisely, plane or surfaces on which the two mould halves meet) and the direction in which the mould opens, which is generally at right angles to the overall direction of the mould split line. However, generally speaking, an undercut is a recess in the part which requires a corresponding protrusion in the mould, a portion of the part being obscured by the protrusion when notionally viewed from the mould split line. This protrusion then acts as an obstruction which has the effect of preventing the part from being demoulded, i.e. removed from one or other mould half.

It is preferable to re-design the part or the mould to eliminate undercuts, but when this cannot be done, it is normally necessary to employ a mould with side action in the form of one or more sliding cores. A sliding core is an additional movable mould part within a mould half which is normally retracted before the mould is opened; the sliding core is used to form the above-mentioned protrusion in the mould, and the ability to retract it thereby enables the part to be removed from the mould.

Unfortunately, the use of sliding cores also has disadvantages because it creates additional visible parting lines on the part and adds to the moulding cycle time. The provision of sliding cores also adds cost and complexity to the mould since additional machining is required. Moreover, the joints between sliding cores and the surrounding mould can easily give rise to leakage of elastomeric material, resulting in protruding fringes known as "flash", which have to be removed in a finishing process. Furthermore, additional maintenance is also needed for sliding cores. For all these reasons, it is preferable to eliminate sliding cores whenever possible.

A certain depth of undercut can be accommodated without the use of sliding cores in the mould, because the elastomeric material is able to deform elastically during removal of the part from the mould, enabling it to pass by the obstructing part of the mould. Increased deformation is possible with softer, more yielding materials, but a retaining portion formed from a softer material will not engage the clips so securely, and hence not retain the retaining clips so well. On the contrary, in order for the retaining clips to be securely retained on the retaining portion of the glazing profile, a higher degree of stiffness is required for the retaining portion than is desirable for the remainder of the glazing profile.

In other words, a conflict of requirements regarding the elastomeric material arises. Furthermore, the properties of softer materials may not satisfy the requirements of the glazing profile in other respects, e.g. in relation to the locating, spacing and sealing functions mentioned above. If on the other hand the groove depth is reduced to facilitated removal of the part from the mould, this in turn also leads to a reduced ability of the retaining portion to retain the retaining clips.

These problems are addressed by US 6,546,683, which discloses a vehicle window unit comprising a window and a frame, i.e. a glazing profile. Retaining devices for retaining add-on parts such as trim strips are provided at a plurality of peripheral locations of the frame. Each retaining device is formed by a retaining strip and a retaining clip. The retaining strip is arranged on the outside of the frame and is permanently bonded to it, for example the retaining strip may be partially formed in the frame. In particular, US 6,546,683 discloses a retaining strip which is provided on a prefabricated insert body. The insert body is a plastic moulding of higher strength than the material of the frame, i.e. this approach allows the retaining strip to be formed in a material which is better suited to holding the retaining clips.

However, the solution proposed by US 6,546,683 is not without disadvantages. Use of a prefabricated insert body of different material leads to additional cost and complexity, since an additional component needs to be specified and provided, and then accurately positioned in the mould prior to each moulding operation. Use of a different material may also give rise to problems due to differential thermal expansion, chemical incompatibility, and lack of adhesion between the insert body and the frame. Furthermore, the problem of removing an undercut part from a mould is not solved as such, it is merely transferred to the maker of the prefabricated insert body.

It would be desirable to find an improved solution to the problem of moulding undercut parts, in particular of removing such parts from the mould. It would also be desirable to find an improved solution to the problem of mounting a decorative trim strip securely on a glazing profile, and more specifically, it would be desirable to find a way of removing a glazing profile having an undercut region from a mould without using sliding cores, and of securely attaching a retaining clip for a decorative trim strip to a glazing profile which obviates the problems described above.

According to the present invention, there is provided a vehicle glazing for receiving a decorative trim strip, the glazing comprising a pane of glass having a glazing profile extending around at least part of its periphery, wherein the decorative trim strip is adapted to be attached to the glazing profile by at least one retaining clip, characterised in that:
the glazing profile includes a retaining portion for receiving and retaining the at least one retaining clip, the retaining portion being composed of the same material as the remainder of the glazing profile, the retaining portion being an integral part of the glazing profile,
the retaining clip adapted to be mounted directly on the retaining portion of the glazing profile,
the retaining portion comprises a protruding portion together with an undercut region for retaining the retaining clip, and
a recess is provided in the retaining portion of the glazing profile adjacent the undercut region
wherein the depth of the recess is greater than its width.

The provision of a recess adjacent the undercut region is a simple and elegant solution to the problem of removing an undercut part from a mould, which in this instance has been applied to the problem of removing a specific type of part, namely a glazing profile, with an undercut region from a mould. This solution renders the part more flexible and compliant in just the area where flexibility is required, without compromising the properties of the whole part, as would be the case if a softer elastomeric material were used for the whole part. Needless to say, the recess is oriented so that it does not itself cause an undercut. The recess is therefore oriented so that no part of the mould, such as the protrusion which moulds the recess, is positioned between the mould split line and the recess. This is achieved by ensuring that it is possible to draw an uninterrupted line, parallel to the direction of opening of the mould, from the mould split line to all points on the part in the vicinity of the recess. By "uninterrupted" is meant that the line does not cross part of a mould half, so that no part of a mould half acts as an obstacle to removal of the part from the mould half.

While the additional compliance conferred by the recess is desirable at the time of demoulding, it may be undesirable in the finished part, e.g. if the latter requires a certain degree of stiffness. In the present application, it would additionally be desirable to ensure that the ability to temporarily elastically deform the retaining portion of the glazing profile does not result in an increased tendency for the retaining clip to become detached from the retaining portion, possibly resulting in the loss of the decorative trim strip.

According to another aspect of the invention, a means of allaying, countering or compensating for the additional compliance is provided. In the application described, the retaining clip preferably has a protruding portion adapted to protrude into the recess in the retaining portion of the glazing profile. This has the effect of preventing deformation of the retaining portion once the retaining clip is in place on the retaining portion. In effect the retaining clip then "locks" the retaining portion. The retaining clip comprises at least one wall, and the protruding portion of the clip may protrude from the wall.

This technique for dealing with undercut parts does not require the use of an insert body incorporated in the moulding. Preferably, the moulding (i.e. the glazing profile) is composed of a single elastomeric material, which more preferably is uniform. In particular, the retaining portion is preferably composed of the same material as the remainder of the glazing profile, i.e. the retaining portion is an integral part of the glazing profile.

Preferably the recess in the retaining portion is in the form of an elongate channel having a base and two sidewalls, wherein in cross-section the elongate channel has a flat or rounded base and diverging or parallel sidewalls. The recess may include an arc of a circle, and the cross-section may be in the shape of the letter U with the limbs of the U either parallel or diverging from each other. Diverging sidewalls facilitate removal of the part from the mould.

The temporary elastic deformation of the retaining portion may temporarily partially close the recess, because the elastomeric material of the retaining portion temporarily occupies the recess.

Preferably the retaining clip and decorative trim strip comprise engagement means which cooperate to retain the decorative trim strip in position on the glazing profile. These engagement means are described in more detail below.

The depth of the recess is greater than its width. This increases the effectiveness of the recess in permitting the retaining portion to deform, thus allowing the part to be released from the mould. Preferably the depth of the protruding portion of the retaining clip is at least half the depth of the recess. This ensures that the protruding portion of the retaining clip provides adequate support to the part of the glazing profile which defines the recess, thereby minimising unwanted deformation of the profile when the clip is in position on the profile.

The glazing profile may be bonded to the pane of glass by moulding the glazing profile in situ on the pane of glass. For instance, the injection moulding process described above, in which the pane of glass is placed in the mould, may be used. The invention provides an advantageous combination of a vehicle glazing as described above, together with the retaining clip for a decorative trim strip as described above, wherein the retaining clip is mounted on the retaining portion of the glazing profile and retained by it, the recess in the retaining portion of the glazing profile is defined by at least one sidewall, and the protruding portion of the retaining clip protrudes into the recess in the retaining portion and makes contact with the sidewall. Preferably the protruding portion of the retaining clip locates in the recess. More preferably, the protruding portion of the retaining clip supports the part of the retaining portion between the undercut region and the recess, reducing its ability to deform. The protruding portion of the retaining clip may contact substantially a whole sidewall of the recess, and may substantially occupy the whole recess.

The invention also provides the combination of the vehicle glazing, the retaining clip, and the decorative trim strip, all as herein described.

According to a further aspect, the invention also provides a retaining clip for retaining a decorative trim strip on a moulded elastomeric glazing profile, the retaining clip comprising an elongate channel-shaped body having a top wall or roof, two sidewalls attached to the top wall, and a longitudinal axis extending along the length of the channel-shaped body, the walls being generally parallel to the longitudinal axis, wherein at least parts of the sidewalls serve as opposed retaining wings for retaining the retaining clip in place on a retaining portion of the glazing profile, and the retaining clip is also provided with additional opposed engaging wings which extend outwardly of the retaining wings in a direction perpendicular to the longitudinal axis, and serve to engage the decorative trim strip, wherein a protruding portion is provided in the top wall of the retaining clip, the depth of the protruding portion being greater than its width, and the protruding portion protrudes in a direction between the sidewalls and is adapted to protrude into a recess in the retaining portion of the glazing profile, in order to reinforce the retaining portion and thereby prevent deformation of the retaining portion.

The protruding portion of the retaining clip may be continuous with the top wall of the clip, and may be V-shaped in cross-section. This provides better support to the walls of the recess when the latter is V-shaped in cross-section. Alternatively, the protruding portion of the retaining clip may be formed by cutting the top wall of the clip, and may comprise one or more tabs extending downwardly from the top wall. The retaining clip may have a cross-section approximating to a letter M, wherein the parallel limbs of the M are formed by the opposed retaining wings for retaining the retaining clip in place on a retaining portion of the glazing profile, and the central V-shaped part of the M is constituted by the protruding portion.

Preferably the protruding portion of the clip is integral with the clip. More preferably, the protruding portion is continuous with the roof or top wall of the clip. Alternatively, the protruding portion of the clip may be formed by cutting the roof of the clip. Preferably the clip comprises means to prevent longitudinal sliding of the clip when in place on the retaining portion of the glazing profile, the means preferably comprising apertures, barbs or hooks in the clip which engage the retaining portion.

According to a still further aspect, the invention provides a method of mounting a decorative trim strip on a glazing profile of a vehicle glazing, wherein the vehicle glazing comprises the glazing profile and a pane of glass, and the decorative trim strip is attached to the glazing profile by at least one retaining clip, the method comprising:
- moulding the glazing profile in situ on the pane of glass in a mould, thereby
- bonding the glazing profile to the pane of glass, wherein the glazing profile is provided with a retaining portion including an undercut region for retaining the retaining clip and a recess in the retaining portion adjacent the undercut region,
- removing the glazing profile from the mould, including temporarily elastically deforming part of the retaining portion between the undercut region and the recess,
- mounting the at least one retaining clip on the retaining portion of the glazing profile, including again temporarily elastically deforming part of the retaining portion between the undercut region and the recess as each retaining clip is urged onto the retaining portion, wherein a protruding portion of each retaining clip enters the recess, thereby
- reinforcing the retaining portion of the glazing profile and preventing deformation of the retaining portion,
- attaching the decorative trim strip to the glazing profile by urging the trim strip into engagement with the at least one retaining clip.

This method provides a solution to the problem of demoulding an undercut part (i.e. removing it from the mould), without compromising the characteristics of the finished part. The additional compliance provided by the recess in the retaining portion of the glazing profile is compensated by the support provided by the protruding portion of the retaining clip.

During removal of the glazing profile from the mould, the temporary elastic deformation of the retaining portion may temporarily partially close the recess. The presence of the recess may have the effect of dividing the retaining portion into two limbs, which are squeezed together, thereby temporarily closing the recess, as the glazing profile is pulled from the mould.

The present invention also provides a vehicle glazing for receiving a decorative trim strip, the glazing comprising a pane of glass having a glazing profile extending around at least part of its periphery, wherein the glazing profile is moulded from elastomeric material in a mould, and includes a retaining portion for retaining a retaining clip for the decorative trim strip, and the retaining portion is provided with an undercut region for receiving and retaining the retaining clip, characterised in that a recess is provided in the vicinity of the undercut region such that the part of the retaining portion between the undercut region and the recess may be temporarily elastically deformed as the glazing profile is removed from the mould.

The invention will now be further described by way of the following specific embodiments, which are given by way of illustration and not of limitation, with reference to the accompanying drawings in which:-
Figure 1 is a plan view of a vehicle glazing which is provided with a decorative trim strip according to the invention;
Figure 2 is a sectional view of part of a first embodiment of a vehicle glazing as shown in Figure 1, the section being taken on line II-II of Figure 1 and showing a glazing profile of the vehicle glazing, a retaining clip and the decorative trim strip;
Figure 3 is a perspective view of a first embodiment of retaining clip for retaining the decorative trim strip of Figures 1 and 2;
Figure 4 is a perspective view, partially in section, of part of a retaining clip according to a second embodiment;
Figure 5 is a plan view of part of the retaining clip of Figure 4;
Figure 6 is a sectional view of part of a vehicle glazing according to the second embodiment, showing the retaining clip of Figures 4 and 5 sectioned on the line VI-VI of Figure 5;
Figure 7 is a similar sectional view of the vehicle glazing of Figure 6, but showing the retaining clip of Figures 4 and 5 sectioned on the line VII-VII of Figure 5;
Figure 8 is a perspective view of a retaining clip according to a third embodiment of the invention;
Figure 9 is a perspective view of half of the retaining clip shown in Figure 8, the clip having been divided in two by cross-sectioning it, the half clip being shown together with part of a glazing profile according to the invention;
Figure 10 is an end view, partially in section, of the half clip of Figure 9; and
Figure 11 is a sectional view of part of a mould for moulding the glazing profile.

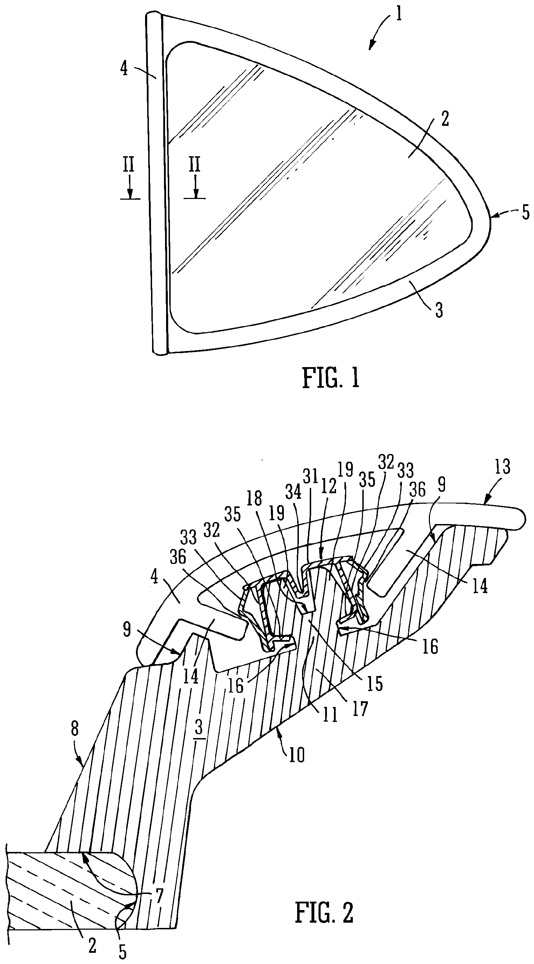

Figure 1 shows a vehicle glazing 1 comprising a pane of glass 2 having a glazing profile 3 extending around part of the periphery 5 of the pane. A decorative trim strip or finisher 4 is mounted on the glazing profile, and attached to it. As described earlier, the colour of the trim strip may be any of a variety of colours, and in particular it may be black or silver. Similarly, its finish may also be any of a variety of finishes such as matt, glossy, satin, chrome or similar. The trim strip may be composed of a plastics material or of metal, e.g. stainless steel, aluminium or an aluminium alloy. Although the trim strip is shown as being straight, and extending along only one edge of the pane, it may alternatively be curved, and may also extend around one or more corners of the pane.

The glazing profile 3 is preferably moulded in situ on the pane of glass 2, again, as mentioned above. One consequence is that the glazing profile as formed is inherently bonded to the pane of glass as a result of the moulding operation. If a prefabricated glazing profile such as a gasket or weather-strip is used, it is necessary to bond it to the glass in a separate operation. The glazing profile is composed of an elastomeric material such as a thermoplastic elastomer (TPE), PVC, or polyurethane. The pane of glass may be composed of any of type of glass commonly used in vehicles, e.g. toughened or laminated, tinted or clear, coated or uncoated.

Figure 2 shows a sectional view of part of the vehicle glazing of Figure 1, taken on the line II-II of Figure 1. The glazing profile 3 comprises a surface 7 which is bonded to the pane of glass 2, a surface 8 which is exposed and thus visible in use, a surface 9 which is remote from the glass and normally covered by the decorative trim strip 4, and a surface 10 which faces and/or abuts the mounting flange of the vehicle bodywork (not shown), and thus is not visible in use. The decorative trim strip 4 comprises a visible surface 13, sometimes referred to as a "show face", and is provided with two retaining legs 14 which retain the trim strip in position on the glazing profile.

The glazing profile includes a retaining portion 11 for retaining a retaining clip 12 for the decorative trim strip 4. The surface of the retaining portion 11 therefore forms part of surface 9. The retaining portion 11 of the glazing profile 3 generally comprises a raised or protruding portion, i.e. a protuberance or boss, 15 in the form of an elongate block or rail, together with an undercut region 16 which is provided at the point where the retaining portion 11 joins the main body 17 of the glazing profile. The undercut region 16 preferably takes the form of opposed elongate grooves extending along either side of the retaining portion 11. This confers the retaining portion 11 with an appearance in cross-section which resembles a head 15 and a neck 16.

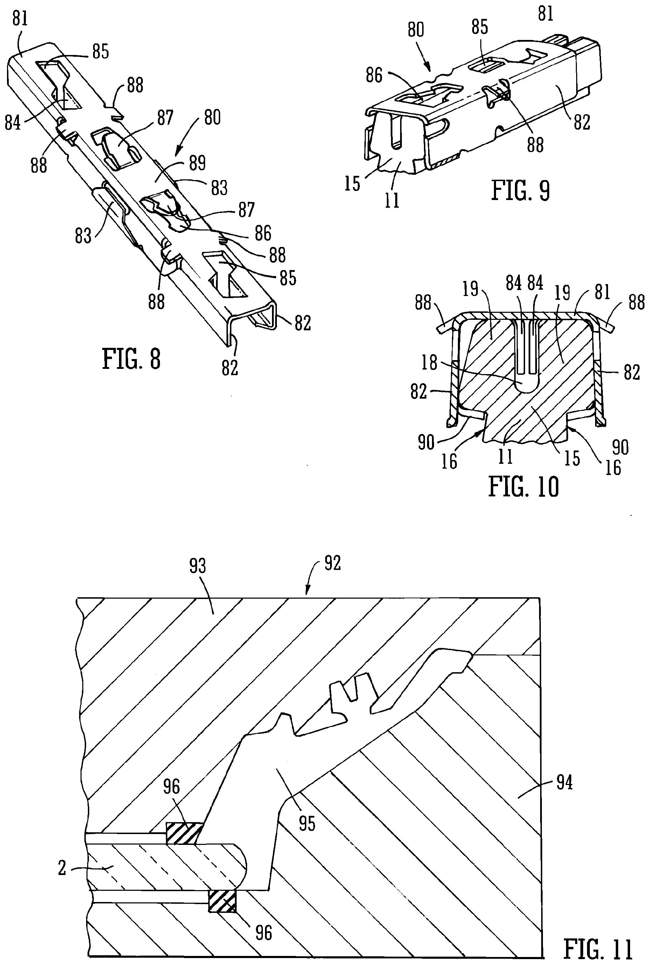

Although one possible mould in which the glazing profile is moulded is described later in connection with Figure 11, it will be understood by one skilled in the art that the presence of the undercut region 16 on the retaining portion 11 would normally prevent the removal of the glazing profile from the mould unless sliding cores were used to mould the undercut region, in which case the sliding cores would be retracted so that they could pass the retaining portion without fouling it when the mould is opened. However, by providing a recess 18 in the retaining portion 11, the recess being positioned adjacent the undercut region 16, it becomes possible for the part of the retaining portion 11 between the undercut region and the recess to be temporarily elastically deformed as the glazing profile is removed from the mould.

The presence of the recess 18 has the effect of dividing the retaining portion 11 into two elongate ridges 19 which appear as limbs in cross-section as shown in Figure 2. When the retaining portion 11 is deformed in order to remove it from the mould, the deformation brings the ridges 19 together so as to partly or wholly close up the recess 18; in short, the limbs are squeezed together. Moreover, this deformation also opens up the undercut regions 16, and the overall effect is to narrow the retaining portion 11 so that it can escape from the mould without the need for sliding cores. The recess 18 should be positioned sufficiently close to the undercut regions to allow the part of the block 15 between the undercut and the recess to deform towards the recess. This deformation may involve a rotational movement of that part of the block. Thus the recess should be in the vicinity, preferably in the close vicinity, of the undercut regions. If the undercut regions are far apart, two or more recesses may be required, with a corresponding number of protruding portions on the retaining clip.

In this embodiment, the recess 18 may be in the form of an elongate channel having a cross-section with a flat or rounded base and diverging sidewalls. It is helpful for the sidewalls to diverge because this provides a draft angle facilitating removal of the part from the mould. Alternatively the sidewalls may be parallel as described in connection with the later embodiments of the invention.

Preferably, the recess 18 is not in the plane of the pane of glass 2; the recess is out of the plane of the pane, and distant from it. For instance, in Figure 2 the recess 18 in the retaining portion 11 is some distance above the plane of the pane 2, in the orientation illustrated.

The boss or retaining block 15 may be generally trapezoidal in section, disregarding the recess 18. Certainly it is preferable to provide the sides of the block with draft angles to facilitate removal of the glazing profile from the mould. These draft angles also serve to guide the retaining clip into position as it is urged onto the block 15 of the retaining portion 11.

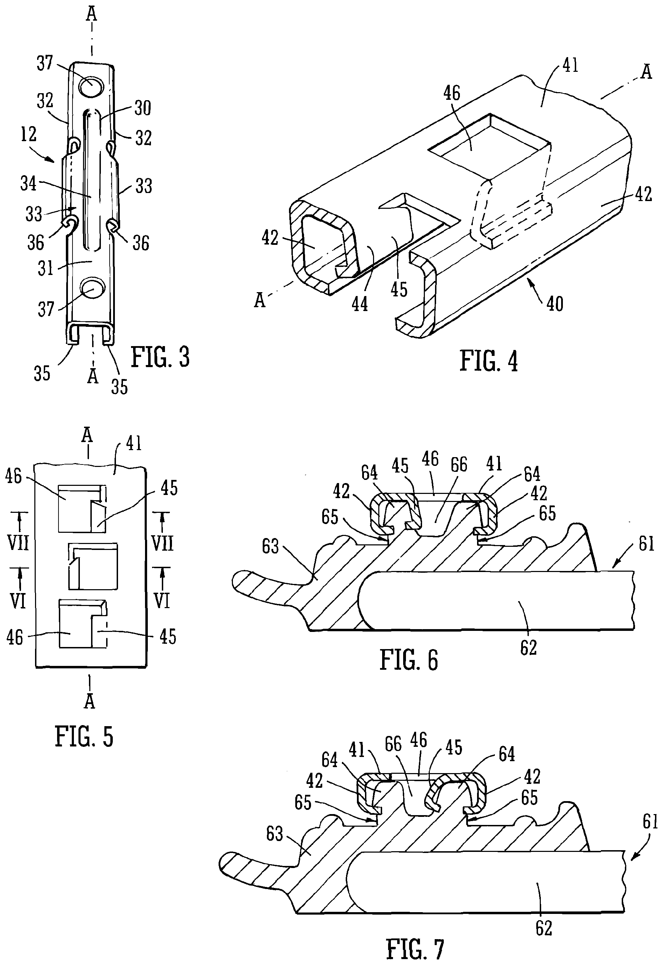

Figure 3 shows a perspective view of the retaining clip 12, which is best considered in conjunction with the cross-sectional view of the clip provided in Figure 2. The retaining clip comprises an elongate channel-shaped body 30 having a roof or top wall 31, two sidewalls 32 attached to the top wall, and a longitudinal axis A-A extending along the length of the channel-shaped body. The walls are generally parallel to the longitudinal axis, and parts of the sidewalls serve as opposed retaining wings for retaining the retaining clip 12 in place on the retaining portion 11 of the glazing profile 3. The retaining clip 12 is also provided with additional opposed engaging wings 33 which extend outwardly of the retaining wings 32 in a direction perpendicular to the longitudinal axis A-A, and serve to engage the legs 14 of the decorative trim strip 4.

It has already been described how the retaining portion 11 of the glazing profile 3 may be deformed to extract the glazing profile from the mould. It would however be undesirable for the retaining portion to be deformed in that manner when the retaining clip 12 is in place on it, because that would release the clip, leading to the detachment and possible loss or damage of the decorative trim strip. It is therefore an important further aspect of the invention to prevent deformation of the retaining portion 11 once the clip is in place.

This is achieved by providing a protruding portion 34 in the top wall 31 of the retaining clip 12 which protrudes in a direction between the sidewalls of the clip and is adapted to protrude into the recess 18 in the retaining portion 11 of the glazing profile 3. Deformation of the retaining portion 11 is thereby prevented, because the retaining portion, or more specifically its constituent limbs 19, comes into contact with the protruding portion 34 of the clip. Preferably, the protruding portion 34 makes contact with at least one sidewall of the recess; more preferably, the protruding portion is shaped so as to locate in the recess. For example, the protruding portion might fill the width of the recess, and/or contact both sidewalls at once, or it may substantially fill the recess.

The protruding portion 34 of the clip thereby supports the part of the retaining portion 11 situated between the undercut region 16 and the recess 18, reducing its ability to deform. In effect, the retaining clip 12 reinforces the retaining portion 11 of the glazing profile; the clip may be said to "lock" the retaining portion once in place, preventing it from deforming.

In order to hold the retaining clip 12 in position on the retaining portion 11 even more securely, the protruding portion 34 of the clip may be arranged to compress the retaining portion within the clip. That is, the clip may force the sides of the recess apart when the clip is urged onto the retaining portion. This may be achieved by configuring the protruding portion as a wedge which is oversize for the recess, or the protruding portion may expand once in position, preferably through mechanical action.

A preferred form of retaining clip 12 comprises an elongate channel-shaped body having a cross-section approximating to a letter M, wherein the parallel limbs of the M are formed by opposed retaining wings 32 for retaining the retaining clip in place on a retaining portion 11 of the glazing profile 3. The retaining clip is also provided with additional opposed engaging wings 33 which extend outwardly of the retaining wings, and serve to engage the decorative trim strip 4. The central V-shaped part of the M is constituted by a protruding portion 34 adapted to protrude into the recess 18 in the retaining portion 11 of the glazing profile 3.

The lower, or free, edges of the retaining wings 32 of the retaining clip 12 are curved towards each other so as to provide the wings with engaging portions 35 each of which resemble a hook in cross-section. Each engaging portion 35 engages with one of the grooves that forms each undercut region 16, thereby retaining the retaining clip 12 in place on the retaining portion 11 of the glazing profile 3.

The engaging wings 33 of the retaining clip are shaped so as to have a ledge or shoulder 36 which engages with each retaining leg 14 of the decorative trim strip 4, thereby retaining the trim strip 4 in place on the clip, and hence in turn retaining the trim strip on the retaining portion 11 of the glazing profile 3. The engaging wings 33 including their shoulders 36 together with the legs 14 of the trim strip 4 serve as engagement means which cooperate to retain the trim strip 4 in position on the glazing profile 3. Many of the elements of the clip 12 may also be seen in Figure 2.

Preferably the protruding portion of the clip is integral with the rest of the clip. The clip may be formed. e.g. stamped, from thin sheet metal, preferably of a non-rusting type, such as coated or plated steel, or a non-ferrous metal. In this embodiment, the protruding portion 34 of the clip is formed by deforming the metal without cutting or tearing it; the metal remains continuous and the protruding portion is in the form of a bulge. Apertures 37 are provided in the roof 31 of the clip; these engage with corresponding protrusions provided on the retaining portion of the glazing profile to prevent the clip sliding along the retaining portion.

Figures 4 to 7 show a second embodiment of retaining clip and glazing profile. Figure 4 is a perspective view, partially in section, of part of the second embodiment of retaining clip 40. The clip has been partially sectioned in order to show the retaining mechanism better. This retaining clip also has an elongate channel-shaped body having a top wall or roof 41, two sidewalls attached to the top wall, and a longitudinal axis A-A. Also as before, the clip has retaining wings 42 and engaging wings (not shown).

In this embodiment, the clip is also formed from thin sheet metal as before, but the protruding portion 44 is formed by cutting the metal to provide a wing or claw 45 having free edges. Each claw is bent into the channel-shaped body along a hinge axis which is parallel to the longitudinal axis A-A. This method of forming the claws 45 provides apertures 46 in the roof 41 of the clip.

Figure 5 is a plan view of part of the second embodiment of retaining clip, showing three of the apertures 46 in the roof 41. The claws 45 are alternately on the left and right sides of the apertures, i.e. the hinge axes by which the claws are attached to the roof alternate between the left and right sides. This may be seen more clearly in Figures 6 and 7.

Figure 6 is a sectional view of part of a vehicle glazing 61 according to the second embodiment, showing a pane of glass 62 having a glazing profile 63. The section is taken on line VI-VI of Figure 5. The glazing profile has a retaining portion 64 with an undercut region 65 in the form of a groove, all generally similar to the corresponding features of the first embodiment. As before, a generally channel-shaped recess 66 is provided in the vicinity of the undercut region 65. While not limiting to this embodiment, the recess has a cross-section which includes an arc of a circle. Preferably the cross-section is in the shape of a letter; the cross-sectional shape could however be the same as that of the first embodiment, and similarly the first embodiment could have a recess shaped as just described. Further alternatively, the walls of the recess could be wholly curved, i.e. the recess of either embodiment could be in the shape of a letter C oriented like a U, i.e. with the open part of the C facing upwards, as shown in the drawing. As viewed in Figure 6, the claw 45 is on the left-hand side of the aperture 46, and supports the left-hand sidewall of the recess 66.

Figure 7 is again a sectional view of part of the vehicle glazing 61 according to the second embodiment; the section being taken on line VII-VII of Figure 5. As viewed in Figure 7, the claw 45 is on the right-hand side of the aperture 46, and supports the right-hand sidewall of the recess 66. For the clip to engage securely with the retaining portion 64 of the glazing profile 3, it is preferable for at least two claws to be provided, forming an opposed pair of left and right-handed claws. For greater stability of the clip, four claws arranged as two opposed pairs are preferred. Multiples of this arrangement may be used for longer clips, and/or where particularly high retention forces are required. As in the previous embodiment, the apertures 46 may also serve the function of preventing the clip slipping along the retaining portion.

Figures 8 to 10 show a third embodiment of the invention, in which further provision is made to ensure that the decorative trim strip 4 is mounted securely and accurately on the glazing profile 3. As may be evident, it is unacceptable for such trim strips to appear crooked, or to rattle, for instance.

Figure 8 shows a perspective view of a retaining clip 80 according to this embodiment. As before, the clip comprises a roof or top wall 81 and sidewalls 82 which act as retaining wings. There are engaging wings 83 which engage and retain the decorative trim strip 4. Unlike the previous embodiments, these engaging wings 83 are joined to the body 89 of the clip at the base of the sidewalls 82, rather than to the top wall 81 as before. The protruding portions in the form of tabs 84 extend downwardly from the top wall 81 of the clip, and are formed by cutting the sheet metal of the top wall, thereby forming apertures 85. The tabs 84 may be seen more clearly in Figure 10.

Tabs 87 extend upwardly from the top wall 81 of the clip to engage with corresponding abutments (not shown) on the underside of the decorative trim strip 4, thereby preventing the trim strip from sliding longitudinally. These tabs are also formed by cutting the sheet metal of the top wall, thereby forming apertures 86. To ensure lateral stability, and prevent rattling, the clip is provided with lateral stabilising wings 88 extending from the top wall 51 of the clip.

Figure 9 is a perspective view of half of the clip 80 of Figure 8, with the engaging wings 83 removed for clarity. The half-clip is shown in position on the retaining block 15 of the retaining portion 11 of the glazing profile 3.

Figure 10 is an end view of the half-clip of Figure 9, and thus shows the retaining portion 11 in section, and the clip largely in section except for the downwardly protruding tabs 84 and the lateral stabilising wings 88. Sidewalls 82 have engaging portions 90 which are bent inwardly towards the interior of the clip. These engaging portions 90 locate in the undercuts 16 of the retaining portion 11 of the glazing profile 3.

Figure 11 shows one possible mould 92 in which the glazing profile 3 may be moulded. This mould is adapted to mould the glazing profile in situ on the pane of glass 2. The mould 92 comprises an upper mould half 93 and a lower mould half 94 which together with the pane of glass 2 define a mould cavity 95. Depending on the moulding material employed, seals 96 may be provided. As is known to the skilled person, some moulding materials such as polyurethane possess relatively low viscosity, and for such materials seals are required.

The part of the mould cavity 95 which moulds the retaining portion of the profile may be identified by its shape, and in particular, the parts of the upper mould half 93 which mould the undercut regions. The provision of the recess in the retaining portion allows the glazing profile to be removed from the upper mould half 93 despite the presence of the undercut regions.

## Claims

1. A vehicle glazing (1, 61) for receiving a decorative trim strip (4), the glazing (1, 61) comprising a pane of glass (2, 62) having a glazing profile (3, 63) extending around at least part of the periphery (5) of the pane (2), wherein the decorative trim strip (4) is adapted to be attached to the glazing profile (3, 63) by at least one retaining clip (12, 40, 80),
**characterised in that**:
the glazing profile (3, 63) includes a retaining portion (11, 64) for receiving and retaining the at least one retaining clip (12, 40, 80), the retaining portion (11, 64) being composed of the same material as the remainder of the glazing profile (3, 63), the retaining portion (11, 64) being an integral part of the glazing profile (3, 63),
the retaining clip (12, 40, 80) adapted to be mounted directly on the retaining portion (11, 64) of the glazing profile (3, 63),
the retaining portion (11, 64) comprises a protuberance (15), which protrudes from the glazing profile (3, 63), together with an undercut region (16, 65) for retaining the retaining clip (12, 40, 80), and
a recess (18, 66) is provided in the retaining portion (11, 64) of the glazing profile (3,63) adjacent the undercut region (16, 65),
wherein the depth of the recess (18, 66) is greater than its width.

2. A vehicle glazing as claimed in claim 1 including the at least one retaining clip (12, 40, 80) for retaining the decorative trim strip (4), wherein the retaining clip comprises at least one wall (31, 41, 81) and is provided with a protruding portion (34, 44, 84) which protrudes from the at least one wall and protrudes into the recess (18, 66) in the retaining portion (11, 64) of the glazing profile (3, 63).

3. A vehicle glazing and at least one retaining clip (12, 40, 80) as claimed in claim 2, further including the decorative trim strip (4), wherein the retaining clip and decorative trim strip comprise engagement means (14, 33, 83) which cooperate to retain the decorative trim strip (4) in position on the glazing profile (3, 63).

4. A vehicle glazing as claimed in any preceding claim, wherein the recess (18, 66) is in the form of an elongate channel having a base and two sidewalls and wherein in cross-section the elongate channel has a flat or rounded base and diverging or parallel sidewalls.

5. A vehicle glazing as claimed in any preceding claim, wherein the recess (18, 66) is not an undercut.

6. A vehicle glazing as claimed in any preceding claim, wherein the glazing profile (3, 63) is bonded to the pane of glass (2, 62) by moulding the glazing profile in situ on the pane of glass.

7. A vehicle glazing as claimed in any of claims 2 to 6, wherein the depth of the protruding portion (34, 44, 84) of the retaining clip (12, 40, 80) is at least half the depth of the recess (18,66).

8. A retaining clip (12, 40, 80) for retaining a decorative trim strip (4) on a moulded elastomeric glazing profile (3, 63), the retaining clip (12, 40, 80) comprising an elongate channel-shaped body (30, 89) having a top wall (31,41, 81), two sidewalls (32, 42, 82) attached to the top wall, and a longitudinal axis extending along the length of the channel-shaped body (30, 89), the walls being generally parallel to the longitudinal axis, wherein at least parts of the sidewalls (32, 42, 82) serve as opposed retaining wings for retaining the retaining clip (12, 40, 80) in place on a retaining portion (11, 64) of the glazing profile (3, 63), and the retaining clip (12, 40, 80) is also provided with additional opposed engaging wings (33, 83) which extend outwardly of the retaining wings in a direction perpendicular to the longitudinal axis, and serve to engage the decorative trim strip (4),
**characterised in that** a protruding portion (34, 44, 84) is provided in the top wall (31, 41, 81) of the retaining clip (12, 40, 80), the depth of the protruding portion (34, 44, 84) being greater than its width, and the protruding portion protrudes in a direction between the sidewalls and is adapted to protrude into a recess (18, 66) in the retaining portion (11, 64) of the glazing profile (3, 63), in order to reinforce the retaining portion (11, 64) and thereby prevent deformation of the retaining portion.

9. A retaining clip as claimed in claim 8, wherein the protruding portion (34, 44, 84) of the retaining clip (12, 40, 80) is continuous with the top wall (31,41, 81) of the retaining clip, and is V-shaped in cross-section.

10. A retaining clip as claimed in claim 8, wherein the protruding portion (34, 44, 84) of the retaining clip (12, 40, 80) is formed by cutting the top wall (31, 41, 81) of the retaining clip, and comprises one or more tabs (84).

11. A retaining clip as claimed in any of claims 8 to 10, comprising means to prevent longitudinal sliding of the retaining clip (12, 40, 80) when in place on the retaining portion (11, 64) of the glazing profile (3, 63), the means preferably comprising apertures (37, 46, 86), barbs or hooks in the clip which engage the retaining portion (11, 64).

12. A method of mounting a decorative trim strip (4) on a glazing profile (3, 63) of a vehicle glazing (1, 61), wherein the vehicle glazing comprises the glazing profile (3, 63) and a pane of glass (2, 62), and the decorative trim strip (4) is attached to the glazing profile by at least one retaining clip (12, 40, 80), the method comprising:
- moulding the glazing profile (3, 63) in situ on the pane of glass (2, 62) in a mould (92), thereby
- bonding the glazing profile (3, 63) to the pane of glass, wherein the glazing profile is provided with a retaining portion (11, 64) including an undercut region (16, 65) for retaining the retaining clip (12, 40, 80) and a recess (18, 66) in the retaining portion adjacent the undercut region (16, 65),
- removing the glazing profile (3, 63) from the mould (92), including temporarily elastically deforming part of the retaining portion (11, 64) between the undercut region (16, 65) and the recess (18, 66),
- mounting the at least one retaining clip (12, 40, 80) on the retaining portion (11, 64) of the glazing profile (3, 63), including again temporarily elastically deforming part of the retaining portion (11, 64) between the undercut region (16, 65) and the recess (18, 66) as each retaining clip (12, 40, 80) is urged onto the retaining portion (11, 64), wherein a protruding portion (34, 44, 84) of each retaining clip enters the recess (18, 66), thereby
- reinforcing the retaining portion (11, 64) of the glazing profile (3, 63) and preventing deformation of the retaining portion,
- attaching the decorative trim strip (4) to the glazing profile (3, 63) by urging the trim strip into engagement with the at least one retaining clip (12, 40, 80).

13. A method as claimed in claim 12, wherein temporarily elastically deforming the retaining portion (11, 64) temporarily partially closes the recess (18, 66).

## Patentansprüche

1. Fahrzeugverglasung (1, 61) zum Aufnehmen einer Zierleiste (4), wobei die Verglasung (1, 61) eine Glasscheibe (2, 62) umfasst, die ein Verglasungsprofil (3, 63) aufweist, das sich um mindestens einen Teil des Umfangs (5) der Scheibe (2) erstreckt, wobei die Zierleiste (4) daran angepasst ist, durch mindestens eine Halteklammer (12, 40, 80) an dem Verglasungsprofil (3, 63) befestigt zu werden,
**dadurch gekennzeichnet, dass**
das Verglasungsprofil (3, 63) einen Halteteil (11, 64) zum Empfangen und Festhalten der mindestens einen Halteklammer (12, 40, 80) einschließt, wobei der Halteteil (11, 64) aus dem gleichen Material wie das restliche Verglasungsprofil (3, 63) zusammengesetzt ist, wobei der Halteteil (11, 64) integraler Bestandteil des Verglasungsprofils (3, 63) ist,
die Halteklammer (12, 40, 80) daran angepasst ist, direkt auf dem Halteteil (11, 64) des Verglasungsprofils (3, 63) montiert zu werden,
der Halteteil (11, 64) einen Vorsprung (15), der aus dem Verglasungsprofil (3, 63) hervorsteht, zusammen mit einem Hinterschneidungsbereich (16, 65) zum Festhalten der Halteklammer (12, 40, 80) aufweist, und
eine Aussparung (18, 66) in dem Halteteil (11, 64) des Verglasungsprofils (3, 63) benachbart zu dem Hinterschneidungsbereich (16, 65) vorgesehen ist,
wobei die Tiefe der Aussparung (18, 66) größer als ihre Breite ist.

2. Fahrzeugverglasung nach Anspruch 1, die die mindestens eine Halteklammer (12, 40, 80) zum Festhalten der Zierleiste (4) einschließt, wobei die Halteklammer mindestens eine Wand (31, 41, 81) umfasst und mit einem hervorstehenden Teil (34, 44, 84) ausgestattet ist, der aus der mindestens einen Wand hervorsteht und in die Aussparung (18, 66) in dem Halteteil (11, 64) des Verglasungsprofils (3, 63) hervorsteht.

3. Fahrzeugverglasung und mindestens eine Halteklammer (12, 40, 80) nach Anspruch 2, die weiterhin die Zierleiste (4) einschließen, wobei die Halteklammer und die Zierleiste Eingriffsmittel (14, 33, 83) umfassen, die zusammenwirken, um die Zierleiste (4) auf dem Verglasungsprofil (3, 63) in Position zu halten.

4. Fahrzeugverglasung nach einem vorherigen Anspruch, wobei die Aussparung (18, 66) in der Form eines länglichen Kanals vorliegt, der eine Basis und zwei Seitenwände aufweist und wobei der längliche Kanal im Querschnitt eine ebene oder abgerundete Basis und auseinanderstrebende oder parallele Seitenwände aufweist.

5. Fahrzeugverglasung nach einem vorhergehenden Anspruch, wobei die Aussparung (18, 66) keine Hinterschneidung ist.

6. Fahrzeugverglasung nach einem vorhergehenden Anspruch, wobei das Verglasungsprofil (3, 63) durch Gießen des Verglasungsprofils in situ auf die Glasscheibe an die Glasscheibe (2, 62) gebunden wird.

7. Fahrzeugverglasung nach einem der Ansprüche 2 bis 6, wobei die Tiefe des hervorstehenden Teils (34, 44, 84) der Halteklammer (12, 40, 80) mindestens der halben Tiefe der Aussparung (18, 66) entspricht.

8. Halteklammer (12, 40, 80) zum Festhalten einer Zierleiste (4) auf einem gegossenen elastomeren Verglasungsprofil (3, 63), wobei die Halteklammer (12, 40, 80) einen länglichen kanalförmigen Körper (30, 89) umfasst, der eine obere Wand (31, 41, 81), zwei Seitenwände (32, 42, 82), die an die obere Wand angefügt sind, und eine Längsachse aufweist, die sich entlang der Länge des kanalförmigen Körper (30, 89) erstreckt, wobei die Wände im Allgemeinen parallel zu der Längsachse sind, wobei mindestens Teile der Seitenwände (32, 42, 82) als gegenüberliegende Halteflügel für das Festhalten der Halteklammer (12, 40, 80) an Ort und Stelle auf einem Halteteil (11, 64) des Verglasungsprofils (3, 63) dienen und die Halteklammer (12, 40, 80) außerdem mit zusätzlichen, gegenüberliegenden, einrastenden Flügeln (33, 83) ausgestattet ist, die sich von den Halteflügeln nach außen in einer Richtung senkrecht zu der Längsachse erstrecken und die dazu dienen, die Zierleiste (4) einzurasten,
**dadurch gekennzeichnet, dass** ein hervorstehender Teil (34, 44, 85) in der oberen Wand (31, 41, 81) der Halteklammer (12, 40, 80) vorgesehen ist, wobei die Tiefe des hervorstehenden Teils (34, 44, 84) größer als seine Breite ist und wobei der hervorstehende Teil in eine Richtung zwischen den Seitenwänden hervorsteht und daran angepasst ist, in eine Aussparung (18, 66) in dem Halteteil (11, 64) des Verglasungsprofils (3, 63) hervorzustehen, um den Halteteil (11, 64) zu verstärken und somit die Verformung des Halteteils zu verhindern.

9. Halteklammer nach Anspruch 8, wobei der hervorstehende Teil (34, 44, 84) der Halteklammer (12, 40, 80 kontinuierlich mit der oberen Wand (31 41, 81) der Halteklammer ist und im Querschnitt V-förmig ist.

10. Halteklammer nach Anspruch 8, wobei der hervorstehende Teil (34, 44, 84) der Halteklammer (12, 40, 80) durch Schneiden der oberen Wand (31, 41 81) der Halteklammer geformt ist und eine oder mehrere Laschen aufweist.

11. Halteklammer nach einem der Ansprüche 8 bis 10, die Mittel zum Verhindern des Gleitens in Längsrichtung der Halteklammer (12, 40, 80) umfasst, wenn an Ort und Stelle auf dem Halteteil (11, 64) des Verglasungsprofils (3, 63), wobei die Mittel vorzugsweise Öffnungen (37, 46, 86), Widerhaken oder Haken in der Klammer umfassen, die in den Halteteil (11, 64) eingreifen.

12. Verfahren zur Montage einer Zierleiste (4) auf einem Verglasungsprofil (3, 63) einer Fahrzeugverglasung (1, 61), wobei die Fahrzeugverglasung das Verglasungsprofil (3, 63) und eine Glasscheibe (2, 62) umfasst und die Zierleiste (4) mit mindestens einer Halteklammer (12, 40, 80) an dem Verglasungsprofil befestigt wird, wobei das Verfahren umfasst:
- Gießen des Verglasungsprofils (3, 63) in situ auf der Glasscheibe (2, 62) in einer Form (92), dadurch
- Binden des Verglasungsprofils (3, 63) an die Glasscheibe, wobei das Verglasungsprofil mit einem Halteteil (11, 64) versehen ist, der einen Hinterschneidungsbereich (16, 65) zum Festhalten der Halteklammer (12, 40, 80) und eine Aussparung (18, 66) in dem Halteteil benachbart zu dem Hinterschneidungsbereich (16, 65) einschließt,
- Entnehmen des Verglasungsprofils (3, 63) aus der Form (92) einschließend das vorübergehende elastische Verformen eines Teil des Halteteils (11, 64) zwischen dem Hinterschneidungsbereich (16, 65) und der Aussparung (18, 66),
- Montieren der mindestens einen Halteklammer (12, 40, 80) auf dem Halteteil (11, 64) des Verglasungsprofils (3, 63), wiederum einschließend das vorübergehende elastische Verformen eines Teils des Halteteils (11, 64) zwischen dem Hinterschneidungsbereich (16, 65) und der Aussparung (18, 66), wenn jede Halteklammer (12, 40, 80) auf den Halteteil (11, 64) gezwungen wird, wobei ein hervorstehender Teil jede Halteklammer in die Aussparung (18, 66) eintritt, dadurch
- Verstärken des Halteteils (11, 64) des Verglasungsprofils (3, 63) und Vermeiden der Verformung des Halteteils,
- Befestigen der Zierleiste (4) an dem Verglasungsprofil (3, 63), indem die Zierleiste zum Eingreifen in die mindestens eine Halteklammer (12, 40, 80) gezwungen wird.

13. Verfahren nach Anspruch 12, wobei das vorübergehende elastische Verformen des Halteteils (11, 64) die Aussparung (18, 66) vorübergehend teilweise verschließt.

## Revendications

1. Vitrage de véhicule (1, 61) pour recevoir une bande de garniture décorative (4), le vitrage (1, 61) comprenant un panneau de verre (2, 62) comportant un profilé de vitrage (3, 63) s'étendant autour d'au moins une partie de la périphérie (5) du carreau (2), dans lequel la bande de garniture décorative (4) est adaptée pour être fixée sur le profilé de vitrage (3, 63) par au moins une bride de retenue (12, 40, 80),
**caractérisé en ce que** :
le profilé de vitrage (3, 63) inclut une partie de retenue (11, 64) pour recevoir et retenir l'au moins une bride de retenue (12, 40, 80), la partie de retenue (11, 64) étant composée du même matériau que le reste du profilé de vitrage (3, 63), la partie de retenue (11, 64) étant formée d'un seul bloc avec le profilé de vitrage (3, 63),
la bride de retenue (12, 40, 80) adaptée pour être montée directement sur la partie de retenue (11, 64) du profilé de vitrage (3, 63),
la partie de retenue (11, 64) comprend une protubérance (15), qui fait saillie depuis le profilé de vitrage (3, 63), conjointement avec une région dégagée (16, 65) pour retenir la bride de retenue (12, 40, 80), et
un évidement (18, 66) est formé dans la partie de retenue (11, 64) du profilé de vitrage (3, 63) au voisinage de la région dégagée (16, 65),
dans lequel la profondeur de l'évidement (18, 66) est plus grande que sa largeur.

2. Vitrage de véhicule selon la revendication 1 incluant l'au moins une bride de retenue (12, 40, 80) pour retenir la bande de garniture décorative (4), dans lequel la bride de retenue comprend au moins une paroi (31, 41, 81) et est pourvue d'une partie saillante (34, 44, 84) qui fait saillie depuis l'au moins une paroi et fait saillie dans l'évidement (18, 66) dans la partie de retenue (11, 64) du profilé de vitrage (3, 63).

3. Vitrage de véhicule et au moins une bride de retenue (12, 40, 80) selon la revendication 2, incluant en outre la bande de garniture décorative (4), dans lequel la bride de retenue et la bande de garniture décorative comprennent des moyens de prise (14, 33, 83) qui coopèrent pour retenir la bande de garniture décorative (4) en position sur le profilé de vitrage (3, 63).

4. Vitrage de véhicule selon l'une quelconque des revendications précédentes, dans lequel l'évidement (18, 66) est sous la forme d'un canal allongé ayant une base et deux parois latérales et dans lequel en section transversale le canal allongé a une base plate ou arrondie et des parois latérales divergentes ou parallèles.

5. Vitrage de véhicule selon l'une quelconque des revendications précédentes, dans lequel l'évidement (18, 66) n'est pas un dégagement.

6. Vitrage de véhicule selon l'une quelconque des revendications précédentes, dans lequel le profilé de vitrage (3, 63) est collé sur le panneau de verre (2, 62) en moulant le profilé de vitrage in situ sur le panneau de verre.

7. Vitrage de véhicule selon l'une quelconque des revendications 2 à 6, dans lequel la profondeur de la partie saillante (34, 44, 84) de la bride de retenue (12, 40, 80) est au moins la moitié de la profondeur de l'évidement (18, 66).

8. Bride de retenue (12, 40, 80) pour retenir une bande de garniture décorative (4) sur un profilé de vitrage élastomère moulé (3, 63), la bride de retenue (12, 40, 80) comprenant un corps en forme de canal (30, 89) allongé comportant une paroi supérieure (31, 41, 81), deux parois latérales (32, 42, 82) fixées sur la paroi supérieure, et un axe longitudinal s'étendant le long de la longueur du corps en forme de canal (30, 89), les parois étant globalement parallèles à l'axe longitudinal, dans lequel au moins des parties des parois latérales (32, 42, 82) servent d'ailes de retenue opposées pour retenir la bride de retenue (12, 40, 80) en place sur une partie de retenue (11, 64) du profilé de vitrage (3, 63), et la bride de retenue (12, 40, 80) est aussi pourvue d'ailes de prise opposées (33, 83) supplémentaires qui s'étendent vers l'extérieur des ailes de retenue dans une direction perpendiculaire à l'axe longitudinal, et servent à venir en prise avec la bande de garniture décorative (4),
**caractérisé en ce qu'**une partie saillante (34, 44, 84) est placé dans la paroi supérieure (31, 41, 81) de la bride de retenue (12, 40, 80), la profondeur de la partie saillante (34, 44, 84) étant supérieure à sa largeur, et la partie saillante fait saillie dans une direction entre les parois latérales et est adaptée pour faire saillie dans un évidement (18, 66) dans la partie de retenue (11, 64) du profilé de vitrage (3, 63), afin de renforcer la partie de retenue (11, 64) et d'empêcher ainsi la déformation de la partie de retenue.

9. Bride de retenue selon la revendication 8, dans lequel la partie saillante (34, 44, 84) de la bride de retenue (12, 40, 80) est continue avec la paroi supérieure (31, 41, 81) de la bride de retenue, et est de section transversale en forme de V.

10. Bride de retenue selon la revendication 8, dans lequel la partie saillante (34, 44, 84) de la bride de retenue (12, 40, 80) est formée en découpant la paroi supérieure (31, 41, 81) de la bride de retenue, et comprend une ou plusieurs pattes (84).

11. Bride de retenue selon l'une quelconque des revendications 8 à 10, comprenant des moyens pour empêcher un glissement longitudinal de la bride de retenue (12, 40, 80) quand elle est en place sur la partie de retenue (11, 64) du profilé de vitrage (3, 63), les moyens comprenant de préférence des ouvertures (37, 46, 86), ardillons ou crochets dans la bride qui viennent en prise avec la partie de retenue (11, 64).

12. Procédé de montage d'une bande de garniture décorative (4) sur un profilé de vitrage (3, 63) d'un vitrage de véhicule (1, 61), dans lequel le vitrage de véhicule comprend le profilé de vitrage (3, 63) et un panneau de verre (2, 62), et la bande de garniture décorative (4) est fixée sur le profilé de vitrage par au moins une bride de retenue (12, 40, 80), le procédé comprenant :
de mouler le profilé de vitrage (3, 63) in situ sur le panneau de verre (2, 62) dans un moule (92), ainsi
de coller le profilé de vitrage (3, 63) sur le panneau de verre, dans lequel le profilé de vitrage est pourvu d'une partie de retenue (11, 64) incluant une région dégagée (16, 65) pour retenir la bride de retenue (12, 40, 80) et un évidement (18, 66) dans la partie de retenue au voisinage de la région dégagée (16, 65),
d'enlever le profilé de vitrage (3, 63) du moule (92), incluant de déformer temporairement élastiquement une partie de la partie de retenue (11, 64) entre la région dégagée (16, 65) et l'évidement (18, 66),
de monter l'au moins une bride de retenue (12, 40, 80) sur la partie de retenue (11, 64) du profilé de vitrage (3, 63), incluant de déformer encore temporairement élastiquement une partie de la partie de retenue (11, 64) entre la région dégagée (16, 65) et l'évidement (18, 66) quand chaque bride de retenue (12, 40, 80) est poussée sur la partie de retenue (11, 64), dans lequel une partie saillante (34, 44, 84) de chaque bride de retenue entre dans l'évidement (18, 66), ainsi
renforcer la partie de retenue (11, 64) du profilé de vitrage (3, 63) et empêcher la déformation de la partie de retenue,
fixer la bande de garniture décorative (4) sur le profilé de vitrage (3, 63) en poussant la bande de garniture en prise avec l'au moins une bride de retenue (12, 40, 80).

13. Procédé selon la revendication 12, dans lequel déformer temporairement élastiquement la partie de retenue (11, 64) ferme temporairement en partie l'évidement (18, 66).
